# FASCICULE DE BREVET EUROPEEN

(11) **EP 0 707 558 B1**
(45) Date de publication et mention de la délivrance du brevet: **08.10.1997**
(21) Numéro de dépôt: 94921682.4
(22) Date de dépôt: 05.07.1994
(51) Int. Cl.: C03B 3/02, C03B 5/00, C03B 5/12, B09B 3/00

(54) **PROCEDE DE TRAITEMENT DE RESIDUS DE COMBUSTION ET INSTALLATION DE MISE EN OEUVRE DUDIT PROCEDE**
VERFAHREN ZUR BEHANDLUNG VON VERBRENNUNGSRÜCKSTÄNDEN UND VORRICHTUNG DAFÜR
METHOD FOR PROCESSING COMBUSTION RESIDUES AND PLANT USING SAME

(30) Priorité: 09.07.1993 FR 9308505
(43) Date de publication de la demande: 24.04.1996
(73) Titulaire: ASSOCIATION GRADIENT, F-60206 Compiègne Cédex (FR); STMI - Société des Techniques en Milieu Ionisant, 91190 Gif-sur-Yvette (FR)
(72) Inventeur: ANTONINI, Gérard, F-75012 Paris (FR); PEROTIN, Jean-Pierre, F-92170 Vanves (FR)
(74) Mandataire: Jaunez, Xavier
(86) Numéro de dépôt international: FR9400824
(87) Numéro de publication internationale: WO9501937

(56) Documents cités:
- WO-A-90/07470
- FR-A- 2 670 136
- US-A- 5 022 329
- US-A- 5 032 161

## Description

L'invention concerne le traitement de résidus de comoustion, et plus particulièrement, un procédé de traitement des résidus d'épuration des fumées d'incinération des déchets ménagers ou industriels, dans lequel les cendres volantes sont amenées dans une enceinte chaude pour y être vitrifiées, conformément au préambule de la revendication 1.

Les polluants gazeux sont généralement traités par lavage, pour les déchlorer, les désulfurer, ou les dénitrifier.

Les polluants solides sont par contre plus complexes à traiter, qu'il s'agisse de cendres dites "sous chaudière" récupérées directement sous une chaudière, ou de cendres dites "sous filtre" récupérées sur les filtres d'unités de dépoussiérage. Les cendres volantes peuvent en effet être très chargées, ces pulvérulents solides ayant pu en effet capter des métaux lourds (mercure, plomb notamment) et/ou des chlorures, et/ou des sulfates, et on sait que le problème des métaux lourds est particulièrement aigu pour les résidus d'incinération des ordures ménagères.

Ces produits pulvérulents, contenant des polluants et des fractions de carbone imbrûlé venant de combustion ou de pyrolyse, sont particulièrement délicats à manier et à traiter. De plus, il y a un risque important d'oxydation dès que la température augmente, avec même un risque d'explosion dans certaines situations.

On a proposé des procédés de stabilisation/solidification transformant le déchet en un solide le plus souvent compact, en utilisant des argiles, des ciments et liants hydrauliques, du verre, des céramiques. Cependant, chaque déchet nécessite une étude particulière, et les quantités de matériaux nécessaires sont importantes, ce qui conduit à une augmentation du tonnage à mettre en décharge.

On a également proposé des procédés de vitrification, consistant à porter des cendres toxiques à une température de 1300°C à 1600°C, de façon à produire un verre inerte. Une partie des composés passe alors en phase vapeur dans l'enceinte de vitrification, ce qui est avantageux pour la destruction quasi-totale des dioxines et furanes, mais conduit à la production d'un résidu toxique secondaire.

Les procédés utilisent alors divers modes de chauffage (four à résistances rayonnantes, four à arc à électrodes en molybdène, four à arc plasma triphasé, électrobrûleur) qui sont des techniques bien maîtrisées actuellement.

On pourra ainsi se référer aux documents US-A-5,022,329 et US-A-5,032,161 qui illustrent des installations de vitrification de cendres volantes, ces installations comportant une conduite de transfert, entre un silo de cendres et une enceinte chaude, conformément au préambule de la revendication 8.

Les spécialistes rencontrent cependant encore des difficultés pour le transfert des cendres volantes du silo de cendres jusqu'à l'enceinte chaude de vitrification, ceci en raison des courants de convection très puissants à l'entrée de l'enceinte chaude, et de la dépression que l'on cherche à maintenir dans l'enceinte pour éviter la sortie de gaz toxiques.

L'admission discontinue en fûts ne donne pas pleinement satisfaction. En effet, l'ouverture de l'enceinte chaude pour y introduire le fût de cendres volantes casse le vide intérieur maintenu pour éviter la sortie de gaz toxiques, d'où un risque de pollution, ce risque étant encore aggravé en présence de matières organiques (matières plastiques et résidus pyrolysables notamment). L'aspect sécurité et sûreté de cette solution peut être également mentionné, dans la mesure où le personnel doit être extrêmement prudent à l'ouverture du sas. Enfin, le fût proprement dit étant en matière pyrolysable (en général du carton renforcé) on risque de retrouver des résidus supplémentaires. Finalement, cette technique implique un fonctionnement en régime de bouffées qui est mauvais pour le pilote, et amène à prévoir un surdimensionnement des systèmes de post-combustion, de lavage des fumées, de filtration, ainsi que des éléments de sécurité et d'inertie.

Un autre moyen de transfert a été également proposé, de type continu, rappelant les techniques traditionnelles de convoyage des produits granuleux. On utilise alors une yis de transfert, qui tourne dans une gaine cylindrique (la gaine est fermée pour éviter l'envol de cendres), et qui pénètre à l'intérieur de l'enceinte chaude. Le transport des cendres s'effectue avec un ciel dans la gaine, et l'entrée de celle-ci est mise à l'air libre : de ce fait, on trouve des risques de condensation des métaux lourds, et de dégagement de gaz de condensation qui favorisent la corrosion, car la mise à l'air libre empêche la mise en dépression de l'enceinte chaude. On a alors tenté de pallier cet inconvénient en organisant une fusion localisée des cendres à l'entrée de l'enceinte, pour constituer un bouchon formant presse-étoupe qui autorise alors la mise en dépression, mais cette technique est complexe et difficile à maîtriser.

Un autre moyen de transfert théoriquement possible est la voie pneumatique, mais cette technique implique l'utilisation de quantités d'air importantes, et l'introduction de cet air constitue un inconvénient important car il refroidit la poche de l'enceinte, et augmente donc la consommation énergétique pour maintenir la température de l'enceinte à la valeur désirée.

Pour être complet, il faut mentionner également une approche différente consistant à granuler les cendres avec des liants, pour obtenir des boulettes séchées qui sont ensuite convoyées dans une gaine, par un poussoir mécanique, dans un sas d'entrée de l'enceinte chaude. Cette technique est cependant onéreuse, et on trouve des problèmes de coincement dans la gaine avec le piston pousseur qui sont inhérents au conditionnement sous forme de granules ou de billes.

L'invention a pour but de concevoir une technique de transfert des cendres volantes plus performante, ne présentant pas les inconvénients et/ou limitations précités.

L'invention a ainsi pour objet de réaliser un procédé de traitement, et une installation de mise en oeuvre dudit procédé, qui permettent un transfert satisfaisant des cendres volantes, et ce avec une sécurité optimale pour le personnel concerné et avec un coût d'utilisation raisonnable.

L'invention a également pour objet de réaliser un procédé et une installation qui soient compatibles avec les différents modes de chauffage déjà développés pour les enceintes de vitrification (fours à résistances rayonnantes, fours à arc à électrodes en molybdène, fours à arc plasma triphasé).

Il s'agit plus précisément d'un procédé de traitement de résidus de combustion, notamment des résidus d'épuration des fumées d'incinération des déchets ménagers ou industriels, dans lequel les cendres volantes sont amenées dans une enceinte chaude pour y être vitrifiées, caractérisé en ce qu'on procède à une étape préliminaire de structuration par fluidification des cendres volantes par un mélange de gaz et d'eau avec un agent tensioactif, pour former une mousse cendrée qui est alors transférée en continu dans l'enceinte chaude pour une étape de déstructuration par vitrification flash dans ladite enceinte.

La mousse cendrée constitue un mélange pseudohomogène qu'il est possible de pomper ou de chasser par des moyens de pression/dépression traditionnels, de sorte que l'on peut récupérer les technologies de pompage qui sont mieux maîtrisées que les technologies de transfert mécanique des matériaux pulvérulents. De plus, la mousse cendrée forme un tampon qui est favorable pour la sécurité intrinsèque.

Il peut s'avérer intéressant que la phase solide du mélange triphasique sous forme de mousse comporte, en plus des résidus solides, des ajouts tels que des calcins broyés, des fondants ou des agents sorbants.

Avantageusement, le pourcentage massique de cendres dans le mélange triphasique est inférieur à 75 %, et de préférence compris entre 50 % et 70 %.

Conformément à une autre caractéristique pouvant être envisagée, la phase liquide du mélange triphasique sous forme de mousse comporte en outre au moins un carburant, à l'état liquide ou visqueux, tel que du fioul, une huile résiduelle, un déchet liquide, ou un solvant organique. Avantageusement alors, le pourcentage massique de cendres dans le mélange triphasique est inférieur à 60 %, et de préférence compris entre 4O % et 60 %, le pourcentage massique du carburant étant quant à lui de l'ordre de 15 % à 20 % en fonction du pouvoir calorifique dudit carburant et de la température de vitrification désirée.

Avantageusement encore, la phase liquide du mélange triphasique sous forme de mousse comporte de l'eau avec un agent tensioactif qui est stable à pH élevé.

Il est en outre intéressant que la phase gazeuse du mélange triphasique sous forme de mousse soit composée d'air, ou de gaz d'inertage tel que du gaz carbonique ou de l'azote.

L'invention concerne également une installation de traitement de résidus de combustion, destinée à la mise en oeuvre d'un procédé de traitement présentant l'une au moins des particularités précitées, cette installation comportant une conduite de transfert, entre un silo de cendres et une enceinte chaude, et étant remarquable en ce qu'elle est équipée d'une part d'un ensemble mélangeur/foisonneur traversé par les cendres et recevant le gaz, l'eau et l'agent tensioactif pour y former une mousse cendrée, et d'autre part d'une pompe doseuse ou d'un organe de pressurisation équivalent, amenant la mousse cendrée à un injecteur agencé en partie haute de l'enceinte chaude.

De préférence, un bac-tampon est interposé entre le mélangeur et la pompe doseuse.

Avantageusement encore, l'enceinte chaude est agencée comme un cyclone vertical ou incliné, avec un injecteur de mousse disposé pour une injection tangentielle de la mousse.

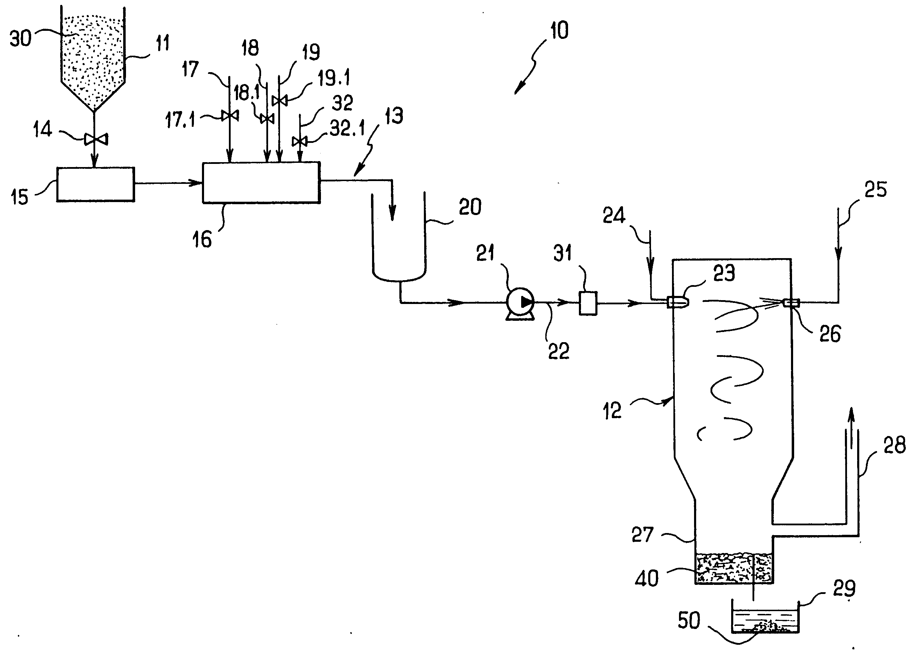

D'autres caractéristiques et avantages de l'invention apparaîtront plus clairement à la lumière de la description qui va suivre et du dessin annexé, concernant un mode de réalisation particulier, en référence à la figure unique du dessin qui illustre schématiquement une installation de traitement conforme à l'invention, pour la mise en oeuvre du procédé de l'invention.

La figure unique illustre une installation 10 de traitement de résidus de combustion, notamment des résidus d'épuration des fumées d'incinération et des déchets ménagers ou industriels. Les cendres volantes 30 à traiter sont initialement disposées dans un silo de stockage 11, et il s'agit d'organiser de façon optimale le transfert de ces cendres volantes dans une enceinte chaude 12 pour qu'elles y subissent un traitement de vitrification.

La sortie du silo de stockage 11 est équipée d'une vanne 14, débouchant vers un moyen d'extraction 15 des cendres stockées, ce moyen d'extraction pouvant être une vis d'extraction, ou encore une simple canalisation lorsque les cendres sont extraites par gravité, grâce à la poussée naturelle. Entre le moyen d'extraction 15 et l'enceinte chaude 12, il est prévu une conduite de transfert 13 dans laquelle les cendres volantes 3O peuvent être acheminées.

Conformément à une caractéristique de l'invention, la conduite de transfert 13 est équipée d'une part d'un ensemble mélangeur/foisonneur 16 traversé par les cendres et recevant un gaz, de l'eau, et un agent tensioactif pour y former une mousse cendrée, et d'autre part une pompe doseuse 21 ou tout organe de pressurisation équivalent amenant la mousse cendrée à un injecteur 23 agencé en partie haute de l'enceinte chaude 12. L'ensemble mélangeur/foisonneur pourra selon le cas être unitaire, ou réalisé en deux unités séparées reliées entre elles. Pour plus de simplicité, il sera seulement mentionné comme "mélangeur" dans la suite de la description.

On a représenté schématiquement des canalisations 17, 18, 19, respectivement équipées de vannes 17.1, 18.1, 19.1, qui mènent au mélangeur 16, afin d'y acheminer le gaz, l'eau, et l'agent tensioactif nécessaires à la formation de la mousse. Ce mélangeur pourra éventuellement être équipé de moyens mécaniques de brassage, afin de favoriser le foisonnement de la mousse cendrée. Ainsi, les cendres volantes 3O arrivant dans la conduite de transfert 13 pénètrent dans le mélangeur 16 et sont automatiquement mélangées à la mousse en formation, cette mousse étant de plus parfaitement confinée.

Il est prévu ici un bac-tampon 20, interposé entre le mélangeur 16 et la pompe doseuse 21, lequel bac-tampon permet naturellement d'avoir un pompage en continu de la mousse cendrée contenue dans ledit bac-tampon. La mousse cendrée constitue un véritable mélange pseudo-homogène qui est pompable ou chassable par pression/dépression, de sorte que l'on peut récupérer les technologies parfaitement maîtrisées du pompage de fluides. La mousse cendrée se présente sous la forme d'un ensemble parfaitement homogène qui est très aisé à véhiculer, ce qui était loin d'être le cas pour les cendres volantes formant un milieu pulvérulent véhiculé par des moyens mécaniques. Les cendres volantes sont parfaitement confinées dans le fluide d'enrobage que constitue la mousse ainsi formée, ce qui est extrêmement favorable sur le plan de la sécurité intrinsèque (inertage au regard d'un risque d'explosivité) et de l'hygiène du travail.

Le tampon de mousse formé entre la pompe doseuse 21 et l'injecteur 23 monté en partie en partie haute de l'enceinte chaude 12 forme en outre un presse-étoupe qui permet de rentrer dans l'enceinte chaude 12 maintenue en dépression: on recueille alors à la fois l'avantage du maintien permanent en dépression de l'enceinte chaude qui évite la sortie de gaz toxique, et d'une injection de la mousse cendrée grâce à la différence des pressions entre la pression exercée par l'organe de refoulement, après préparation dans le mélangeur/foisonneur, et la pression régnant dans l'enceinte, la mousse cendrée étant ainsi injectée et pulvérisée à l'intérieur de cette enceinte chaude, cette pulvérisation étant de surcroît améliorée par la différence de pression régnant à ce niveau entre la phase gazeuse du mélange triphasique et la pression régnant dans l'enceinte.

On a illustré en outre ici la possibilité de disposer un filtre 31 sur la canalisation 22 reliant la pompe doseuse 21 à l'injecteur 23, ce filtre permettant de retenir d'éventuelles matières organiques présentes dans les cendres (matières plastiques ou résidus pyrolysables). Cette barrière sera donc en général intéressante pour éviter d'amener dans l'enceinte chaude les composants intempestifs ne rentrant pas dans la composition connue des cendres volantes.

Ainsi, et conformément à une caractéristique essentielle du procédé de l'invention, on procède à une étape préliminaire de structuration par fluidification des cendres volantes, par un mélange de gaz et d'eau avec un agent tensioactif, pour former une mousse cendrée qui est alors transférée en continu dans l'enceinte chaude 12 pour une étape de déstructuration par vitrification flash dans ladite enceinte, avec à la fois une vaporisation de la phase liquide et une fusion de la phase solide du mélange triphasique.

Le produit de base, constitué de cendres volantes, est resté divisé dans la mousse, ce qui permet d'avoir une fusion quasi-instantanée, à l'intérieur de l'enceinte chaude de vitrification, des particules individuelles, car l'eau et le tensioactif se vaporisent instantanément en pénétrant à l'intérieur de ladite enceinte. Cette déstructuration favorise donc une fusion individuelle et très rapide des résidus, et s'accompagne d'une vaporisation des métaux lourds à grande cinétique. On parvient ainsi à épuiser les polluants qui se transforment tous en phase gazeuse.

Il est intéressant d'observer que l'on met à profit, dans le cadre d'un tel procédé, la grande surface spécifique des particules, qui était un inconvénient dans le cadre des techniques traditionnelles de transfert par des moyens mécaniques en raison des risques d'oxydation, voire d'explosion.

La technique de l'invention permet donc de laisser les cendres volantes sous forme divisée pendant leur transfert, sans les inconvénients précités des techniques connues, ce qui permet la fusion très rapide dans l'enceinte de vitrification. La technique mentionnée plus haut consistant à granuler les cendres volantes avec des liants ne pouvait présenter ces avantages dans la mesure où les boulettes ou granules arrivent sous forme d'agglomérats à l'intérieur de l'enceinte chaude, ce qui ne permet pas de fusion individuelle des particules comme c'est le cas avec la technique de l'invention.

Il convient en outre de noter que l'eau de la mousse protège le produit qui est dans un tampon, ce qui permet de protéger thermiquement le produit avant son introduction. En outre, la vapeur d'eau est favorable à la pulvérisation par vaporisation explosive à l'entrée de l'enceinte chaude, et cette pulvérisation est favorisée par la détente du gaz inclus dans la mousse cendrée: ainsi, la vaporisation flash de l'eau et la détente du gaz constituent toutes deux une assistance à la pulvérisation directement à l'entrée de l'enceinte chaude.

On va maintenant décrire plus en détail la composition des différentes phases du mélange triphasique réalisé sous forme de mousse dans le mélangeur 16.

La phase solide du mélange triphasique comporte essentiellement des résidus de combustion à traiter, mais il est naturellement possible de prévoir que cette phase comporte en outre des ajouts, tels que des calcins de verre, des fondants ou des agents sorbants, notamment pour capter le soufre, afin d'avoir une fusion propre. Sur la figure, on a illustré à cet effet une canalisation 32 équipée d'une vanne 32.1, associée à l'injection d'ajouts, étant entendu que les ajouts solides pourront être introduits avec un fluide porteur (par exemple du calcaire avec de l'eau, pour former un lait de chaux concentré).

Dans la pratique, le pourcentage massique de cendres dans le mélange triphasique sera choisi inférieur à 75 %, et de préférence compris entre 50 % et 70 %. Le reste est constitué par l'eau et l'agent tensioactif, ce dernier présentant un pourcentage massique en général choisi de 1 à 2 %.

La phase liquide du mélange triphasique comporte avant tout de l'eau et un agent tensioactif, ce dernier étant de préférence stable à pH élevé. En effet, les cendres ne se solubilisent pratiquement pas, et elles présentent en milieu aqueux un caractère alcalin très marqué (à titre indicatif, un gramme de cendre mis en solution dans un litre d'eau donne un pH égal à 9,5). Dans la pratique, l'agent tensioactif sera choisi permettant à la fois un moussage avec une teneur en fioul élevée par rapport à celle élevée en eau, et un moussage et une bonne stabilité malgré le caractère très alcalin du mélange. On pourra par exemple utiliser les agents tensioactifs tels que ceux commercialisés sous la marque "WITCONATE", "LAUROPAL" ou "GENAMINOX". Le seuil de 70 % indiqué ci-dessus pour le pourcentage massique des cendres résulte de tests effectués par le déposant, qui indiquent qu'au-delà d'un tel pourcentage le mélange n'est plus assimilable à une mousse, mais à une boue.

Il peut s'avérer intéressant de prévoir que la phase liquide du mélange triphasique comporte en outre au moins un carburant, à l'état liquide ou visqueux, tel que du fioul, une huile résiduelle, un déchet liquide, ou un solvant organique. Dans ce cas, le pourcentage massique de cendres dans le mélange triphasique sera inférieur à 60 %, en étant de préférence compris entre 40 % et 60 %, le pourcentage massique du carburant quant à lui de l'ordre de 15 % à 2O % en fonction du pouvoir calorifique dudit carburant et de la température de vitrification désirée. On constate en effet que la mousse commence à s'effondrer plus tôt en l'absence de carburant, l'effondrement dû à la présence du fioul conjuguée à celle des cendres provoquant une rupture des films interfaciaux. Si l'on souhaite utiliser un carburant liquide ou visqueux, il pourra alors s'avérer intéressant d'augmenter la teneur en agent tensioactif, afin de freiner le phénomène précité.

Il reste de toute façon intéressant de pouvoir disposer de l'une ou l'autre des deux stratégies précitées, l'une limitant l'apport thermique à l'enceinte de vitrification (aucun carburant dans la phase liquide sous forme de mousse), l'autre prévoyant que la composition préalable contient un besoin calorifique de la vitrification (avec présence d'un carburant dans la phase liquide sous forme de mousse), le mélange triphasique sous forme de mousse étant alors autovitrifiant.

Dans la pratique, la phase gazeuse du mélange triphasique sous forme de mousse sera composée d'air, ou d'un gaz d'inertage tel que du gaz carbonique ou de l'azote.

L'enceinte chaude 12 peut être agencée comme un cyclone vertical ou incliné, avec un injecteur de mousse 23 disposé pour une injection tangentielle de la mousse. Il va de soi que l'on pourra prévoir tout autre type d'enceinte chaude, par exemple un four tournant. Cependant, l'injection continue de la mousse cendrée convient particulièrement bien à un cyclone vertical ou incliné, qui permet de répartir le ou les injecteurs de mousse, et les moyens d'apport de chaleur. Il pourra d'ailleurs s'avérer avantageux de prévoir que la mousse cendrée est admise avec un peu d'oxygène par l'injecteur 23, cet oxygène arrivant par exemple par une canalisation associée 24.

On a également illustré sur la figure une canalisation 25 menant à un autre injecteur 26 agencé en partie haute de l'enceinte chaude, avec une orientation permettant une injection tangentielle : ceci correspond à l'injection d'un gaz, ou d'un mélange d'oxygène et de gaz naturel, pour l'apport thermique nécessaire à la vitrification. Pour l'apport thermique, on pourra ainsi utiliser un moyen oxygaz; avec de l'oxygène comme comburant et un carburant qui peut être du gaz naturel, ou encore un électrobrûleur, avec une flamme gaz renforcée par arc électrique, ou encore une torche plasma à arc soufflé.

L'injection de mousse cendrée en partie haute du cyclone permet donc d'utiliser l'un ou l'autre des moyens d'apport calorifique précités, ce qui confère au procédé de l'invention une souplesse très intéressante, dans la mesure où l'on pourra choisir l'un quelconque de ces moyens en fonction du type de résidus à traiter concerné. Les injections d'oxygène ou de gaz seront de préférence prévues tangentiellement, et il sera possible d'organiser un apport de chaleur étagé à la fois dans le sens circonférentiel et dans le sens axial.

Les particules microniques qui fondent instantanément à l'intérieur de l'enceinte chaude 12 permettent de recueillir, dans la poche inférieure 27 de ladite enceinte, un vitrifiat liquide 4O, qui est constitué de verre inerte libéré des métaux lourds. On a représenté ici une sortie traitée 28 pour l'échappement des fumées, sur laquelle seront greffés des systèmes de traitement de fumées, avec une captation des métaux lourds initialement à l'état de vapeur, soit en phase gazeuse (sur filtres), soit en phase liquide (avec récupération ultérieure de ces métaux, par exemple par électrolyse. Il est enfin prévu un bac 5O, dans lequel on dispose de l'eau, ledit bac étant alimenté, par exemple par une surverse, avec du vitrifiat liquide, ce qui permet d'obtenir des granulés de verre inerte, ces granulés pouvant être récupérés tels quels pour être transférés en décharge (puisqu'ils sont débarrassés des métaux lourds), ou réutilisés par exemple dans des applications de génie civil, ou encore transformés, par exemple en étant coulés sous forme de dalle.

Il est intéressant de noter que les cendres fondues se déposant sur la paroi de l'enceinte chaude permettent d'obtenir à la fois une distillation par coulage, mais aussi une protection des parois intérieures de ladite enceinte.

On est ainsi parvenu à concevoir un procédé de traitement et une installation de mise en oeuvre du procédé permettant un transfert satisfaisant des cendres volantes, et ce avec une sécurité optimale pour le personnel concerné et avec un coût d'utilisation raisonnable. De plus, le procédé et l'installation selon l'invention sont compatibles avec les différents modes de chauffage déjà développés pour les enceintes de vitrification (four à résistances rayonnantes, four à arc à électrodes en molybdène, four à arc plasma triphasé ou électrobrûleur, ou encore des systèmes oxygaz).

L'invention n'est pas limitée au mode de réalisation qui vient d'être décrit, mais englobe au contraire toute variante reprenant, avec des moyens équivalents, les caractéristiques essentielles énoncées plus haut.

Par exemple, on pourra remplacer la pompe doseuse par tout moyen équivalent de pressurisation de la mousse permettant de chasser le piston de mousse en direction de l'enceinte chaude de vitrification.

## Revendications

1. Procédé de traitement de résidus de combustion, notamment des résidus d'épuration des fumées d'incinération des déchets ménagers ou industriels, dans lequel les cendres volantes sont amenées dans une enceinte chaude pour y être vitrifiées, caractérisé en ce qu'on procède à une étape préliminaire de structuration par fluidification des cendres volantes par un mélange de gaz et d'eau avec un agent tensioactif, pour former une mousse cendrée qui est alors transférée en continu dans l'enceinte chaude (12) pour une étape de déstructuration par vitrification flash dans ladite enceinte.

2. Procédé selon la revendication 1, caractérisé en ce que la phase solide du mélange triphasique sous forme de mousse comporte, en plus des résidus solides, des ajouts tels que des calcins broyés, des fondants ou des agents sorbants.

3. Procédé selon la revendication 1 ou la revendication 2, caractérisé en ce que le pourcentage massique de cendres dans le mélange triphasique est inférieur à 75 %, et de préférence compris entre 50 % et 70 %.

4. Procédé selon la revendication 1 ou la revendication 2, caractérisé en ce que la phase liquide du mélange triphasique sous forme de mousse comporte en outre au moins un carburant, à l'état liquide ou visqueux, tel que du fioul, une huile résiduelle, un déchet liquide, ou un solvant organique.

5. Procédé selon la revendication 4, caractérisé en ce que le pourcentage massique de cendres dans le mélange triphasique est inférieur à 60 %, et de préférence compris entre 4O % et 60 %, le pourcentage massique du carburant étant quant à lui de l'ordre de 15 % à 2O % en fonction du pouvoir calorifique dudit carburant et de la température de vitrification désirée.

6. Procédé selon l'une des revendications 1 à 5, caractérisé en ce que la phase liquide du mélange triphasique sous forme de mousse comporte de l'eau avec un agent tensioactif qui est stable à pH élevé.

7. Procédé selon l'une des revendications 1 à 6, caractérisé en ce que la phase gazeuse du mélange triphasique sous forme de mousse est composée d'air, ou de gaz d'inertage tel que du gaz carbonique ou de l'azote.

8. Installation (1O) de traitement de résidus de combustion, destinée à la mise en oeuvre d'un procédé de traitement selon l'une quelconque des revendications 1 à 7, comportant une conduite de transfert (13), entre un silo de cendres (11) et une enceinte chaude (12) caractérisée en ce qu'elle est équipée d'une part d'un ensemble mélangeur/foisonneur (16) traversé par les cendres et recevant le gaz, l'eau et l'agent tensioactif pour y former une mousse cendrée, et d'autre part d'une pompe doseuse (21) ou d'un organe de pressurisation équivalent, amenant la mousse cendrée à un injecteur (23) agencé en partie haute de l'enceinte chaude (12).

9. Installation selon la revendication 8, caractérisé en ce qu'un bac-tampon (2O) est interposé entre le mélangeur (16) et la pompe doseuse (21).

10. Installation selon la revendication 8 ou la revendication 9, caractérisée en ce que l'enceinte chaude (12) est agencée comme un cyclone vertical ou incliné, avec un injecteur de mousse (23) disposé pour une injection tangentielle de la mousse.

## Claims

1. A method of processing combustion residues, in particular the residues from the purification of fumes from the incineration of domestic or industrial waste, in which the fly ash is passed into a hot enclosure to be vitrified therein, characterised by effecting a preliminary step for structuration by fluidisation of the fly ash by a mixture of gas and water with a surface-active agent to form an ashy foam which is then continuously transferred into the hot enclosure (12) for a destructuration step by flash vitrification in said enclosure.

2. A method according to claim 1 characterised in that the solid phase of the three-phase mixture in the form of foam comprises, in addition to the solid residues, additives such as crushed cullets, fluxes or sorbent agents.

3. A method according to claim 1 or claim 2 characterised in that the percentage by mass of ash in the three-phase mixture is less than 75% and preferably between 50% and 70%.

4. A method according to claim 1 or claim 2 characterised in that the liquid phase of the three-phase mixture in the form of foam also comprises at least one fuel, in the liquid or viscous state, such as fuel oil, a residual oil, a liquid waste, or an organic solvent.

5. A method according to claim 4 characterised in that the percentage by mass of ash in the three-phase mixture is less than 60% and preferably between 40% and 60%, the percentage by mass of fuel being of the order of 15% to 20% in dependence on the calorific value of said fuel and the desired vitrification temperature.

6. A method according to one of claims 1 to 5 characterised in that the liquid phase of the three-phase mixture in the form of foam comprises water with a surface-active agent which is stable at high pH-value.

7. A method according to one of claims 1 to 6 characterised in that the gaseous phase of the three-phase mixture in the form of foam is composed of air or inerting gas such as carbon dioxide or nitrogen.

8. An installation (10) for processing combustion residues, for carrying out a processing method according to any one of claims 1 to 7, comprising a transfer conduit (13) between an ash silo (11) and a hot enclosure (12), characterised in that it is provided on the one hand with a mixing/swelling assembly (16) through which passes the ash and which receives the gas, the water and the surface-active agent to form therein an ashy foam, and on the other hand a metering pump (21) or an equivalent pressurisation member feeding the ashy foam to an injector (23) arranged in the upper part of the hot enclosure (12).

9. An installation according to claim 8 characterised in that a buffer tank (20) is interposed between the mixer (16) and the metering pump (21).

10. An installation according to claim 8 or claim 9 characterised in that the hot enclosure (12) is arranged like a vertical or inclined cyclone with a foam injector (23) disposed for tangential injection of the foam.

## Patentansprüche

1. Verfahren zur Behandlung von Verbrennungsrückständen, insbesondere von Rückständen, die bei der Reinigung des bei der Verbrennung von Hausmüll oder Industrieabfällen entstehenden Rauches anfallen, wobei die Flugasche einer Heizzelle zugeführt wird, um dort vitrifiziert zu werden, dadurch **gekennzeichnet**, daß man zunächst einen Schritt der Strukturierung durch Fluidisieren der Flugasche mit einem Gemisch aus Gas und Wasser mit einem oberflächenaktiven Stoff durchführt, um einen Ascheschaum zu bilden, der dann kontinuierlich in die Heizzelle (12) transportiert wird, um in dieser Zelle einem Destrukturierungsschritt durch Schnellvitrifizierung unterzogen zu werden.

2. Verfahren nach Anspruch 1, dadurch **gekennzeichnet**, daß die Feststoffphase des als Schaum vorliegenden Dreiphasen-Gemischs neben den Feststoffrückständen Zusätze wie gemahlenes Glas, Flußmittel oder Sorptionsmittel enthält.

3. Verfahren nach Anspruch 1 oder Anspruch 2, dadurch **gekennzeichnet**, daß der Massenanteil der Asche in dem Dreiphasen-Gemisch unter 75% und vorzugsweise zwischen 50% und 70% beträgt.

4. Verfahren nach Anspruch 1 oder Anspruch 2, dadurch **gekennzeichnet**, daß die flüssige Phase des als Schaum vorliegenden Dreiphasen-Gemischs ferner mindestens einen im flüssigen oder viskosen Zustand vorliegenden Brennstoff wie z.B. Treibstoff, ein Rückstandsöl, einen flüssigen Abfallstoff oder ein organisches Lösungsmittel enthält.

5. Verfahren nach Anspruch 4, dadurch **gekennzeichnet**, daß der Massenanteil der Asche in dem Dreiphasen-Gemisch unter 60% und vorzugsweise zwischen 40% und 60% beträgt, während der Massenanteil des Brennstoffs in Abhängigkeit des Heizwertes des Brennstoffes und der gewünschten Vitrifizierungstemperatur im Bereich von 15% bis 20% liegt.

6. Verfahren nach einem der Ansprüche 1 bis 5, dadurch **gekennzeichnet**, daß die flüssige Phase des als Schaum vorliegenden Dreiphasen-Gemischs Wasser mit einem oberflächenaktiven Stoff enthält, der bei hohem pH-Wert stabil ist.

7. Verfahren nach einem der Ansprüche 1 bis 6, dadurch **gekennzeichnet**, daß die Gasphase des als Schaum vorliegenden Dreiphasen-Gemischs Luft oder Inertgas wie Kohlendioxid oder Stickstoff umfaßt.

8. Anlage (10) zum Behandeln von Verbrennungsrückständen zur Durchführung eines Behandlungsverfahrens nach einem der Ansprüche 1 bis 7, mit einer Transportleitung (13) zwischen einem Aschesilo (11) und einer Heizzelle (12), dadurch **gekennzeichnet**, daß sie einerseits eine Misch- und Quellvorrichtung (16), durch die die Asche hindurchtransportiert wird und in die das Gas, das Wasser und der oberflächenaktive Stoff eingeleitet werden, um einen Ascheschaum zu bilden, und andererseits eine Dosierpumpe (21) oder eine gleichwertige Druckbeaufschlagungsvorrichtung enthält, die den Ascheschaum einer Einspritzvorrichtung (23) zuführt, die in einem oberen Bereich der Heizzelle (12) angeordnet ist.

9. Anlage nach Anspruch 8, dadurch **gekennzeichnet**, daß zwischen dem Mischer (16) und der Dosierpumpe (21) ein Ausgleichbehälter (20) vorgesehen ist.

10. Anlage nach Anspruch 8 oder Anspruch 9, dadurch **gekennzeichnet**, daß die Heizzelle (12) als vertikaler oder geneigter Zyklon ausgebildet ist und eine Schaumeinspritzvorrichtung (23) hat, die so angeordnet ist, daß der Schaum in tangentialer Richtung eingespritzt wird.
